# EUROPÄISCHE PATENTSCHRIFT

(11) **EP 3 450 819 B1**
(45) Veröffentlichungstag und Bekanntmachung des Hinweises auf die Patenterteilung: **13.04.2022**
(21) Anmeldenummer: 18187582.4
(22) Anmeldetag: 06.08.2018
(51) Int. Cl.: F17C 5/02

(54) **VERFAHREN ZUM BEFÜLLEN EINES MOBILEN KÄLTEMITTELTANKS MIT EINEM KRYOGENEN KÄLTEMITTEL**
METHOD FOR FILLING A MOBILE COOLANT TANK WITH A CRYOGENIC COOLANT
PROCÉDÉ DE REMPLISSAGE D'UN RÉSERVOIR D'AGENT DE REFROIDISSEMENT MOBILE D'UN AGENT DE REFROIDISSEMENT CRYOGÉNIQUE

(30) Priorität: 31.08.2017 DE 102017008211
(43) Veröffentlichungstag der Anmeldung: 06.03.2019
(73) Patentinhaber: Messer SE & Co. KGaA, 65812 Bad Soden (DE); Messer France S.A.S., 92156 Suresnes Cedex (FR)
(72) Erfinder: Frère, Émilien, 77100 Meaux (FR); Gockel, Frank, 42553 Velbert (DE); Beil, Denis, 53859 Niederkassel (DE)
(74) Vertreter: Münzel, Joachim R.

(56) Entgegenhaltungen:
- DE-C1- 19 704 362
- FR-A1- 3 047 538
- JP-A- 2012 163 119
- US-A1- 2013 263 610

## Beschreibung

Die Erfindung betrifft ein Verfahren zum Befüllen eines Kältemitteltanks eines Fahrzeugs mit einem kryogenen Kältemittel aus einem Füllbehälter.

Die Erfindung bezieht sich dabei insbesondere auf ein Verfahren zum Befüllen von Kältemitteltanks, die zum Kühlen eines Kühlraums bestimmt sind, der sich auf einem Kühlfahrzeug, insbesondere einem Kühllastwagen, befindet. Solche Kühlräume dienen dazu, temperaturempfindliche Waren als Kühlgut bei einer Temperatur von z.B. 4°C bis 10°C, oder als Gefriergut bei Temperaturen unter 0°C zu transportieren. Zur Kühlung derartiger Kühlräume kommen häufig noch konventionelle Kühlaggregate zum Einsatz, die jedoch wegen ihrer hohen Lärmemissionen einerseits und ihrer Dieselemissionen anderseits im laufenden Betrieb mehr und mehr in die Kritik geraten. Als Alternative bietet sich die Kühlung mittels eines kryogenen Kältemittels an. Das kryogene Kältemittel, beispielsweise flüssiger Stickstoff, wird in einem am Fahrzeug montierten thermisch isolierten Kältemitteltank im flüssigen Zustand bevorratet und bei Bedarf über eine Rohrleitung dem Kühlraum zugeführt. Zur Kühlung des Kühlraumes wird das kryogene Kältemittel entweder flüssig oder gasförmig in den Kühlraum eingesprüht (direkte Kühlung) oder über eine Wärmetauscheranordnung mit der Atmosphäre im Kühlraum in indirekten Wärmekontakt gebracht (indirekte Kühlung). Beispiele für derartige Kühlfahrzeuge sowie für Kühlsysteme von Kühlfahrzeugen werden in der WO 2011/141287A1, EP 1 659 355 A2, GB 2 275 098 A oder der EP 2 384 916 A2 beschrieben.

Darüber hinaus bezieht sich die Erfindung jedoch allgemein auf ein Verfahren der eingangs genannten Art zur Befüllung von auf Fahrzeugen, insbesondere Straßen- oder Schienenfahrzeugen, montierten Kältemitteltanks (nachfolgend auch "mobile Kältemitteltanks") mit einem kryogenen Kältemittel.

Die Befüllung von derartigen mobilen Kältemitteltanks erfolgt üblicherweise aus ortsfesten Füllbehältern, in denen das Kältemittel im tiefkalten Zustand gelagert wird. Das Kältemittel wird einer Füllstation zugeführt, die mit einer zumindest teilweise als flexible Schlauchleitung ausgeführten Füllleitung ausgerüstet ist, mittels der der Kältemitteltank befüllt werden kann. Zur Förderung des Kältemittels zur Füllstation oder beim Befüllen des Kältemitteltanks kommt häufig eine Pumpe zum Einsatz. Da Pumpen zur Förderung kryogener Kältemittel aufwändig in Beschaffung und Unterhalt sind und durch sie zudem unerwünschte Wärme in das System eingetragen wird, sieht eine alternative Betankungsmethode vor, das Kältemittel im Füllbehälter bei einem Druck zu bevorraten, der höher ist als der Druck im zu füllenden Kältemitteltank. Dadurch kann eine Befüllung des Kältemitteltanks allein unter der Wirkung der Druckdifferenz zwischen Füllbehälter und Kältemitteltank erfolgen. Verschiedene Vorrichtungen zum Befüllen von Behältern mit flüssigen kryogenen Medien sind beispielsweise aus der FR 3 047 538 A1, der JP 2012 163119A, der DE 197 04 362 C1, der US 2013/263610 A1, der DE 33 36 466 B1, der WO 03/056232 A1 oder der WO 2010/094876 A1 bekannt.

In der Regel weisen derartige Füllvorrichtungen zwei Leitungen auf, mit denen Fülllbehälter und Kältemitteltank miteinander verbunden werden. Eine erste Leitung dient dabei zum Zuführen von flüssigem kryogenem Kältemittel zum Kältemitteltank, eine zweite Leitung dient zum Abführen von verdampftem kryogenen Kältemittel aus dem Kältemitteltank. Eine gleichzeitige Verbindung der Behälter mit zwei Leitungen ist allerdings sehr aufwändig und birgt zudem eine erhöhte Gefahr, dass es aufgrund eines Bedienfehlers zum Austritt von kryogenem Kältemittel in die Umgebung kommt. Ein weiteres Problem besteht bei öffentlichen Füllstationen zur Befüllung von Kältemitteltanks. Hier muss aufgrund gesetzlicher Vorschriften sichergestellt werden, dass eine während der Betankung abgemessene Menge an Kältemittel vollständig in den Tank eines Kunden überführt wird, um dort eine Kühlleistung zu erbringen. Dies kann aber dann, wenn das verdampfende Kältemittel gleichzeitig mit der Zuführung des flüssigen Kältemittels abgezogen wird, nicht ohne weiteres gewährleistet werden, da aufgrund von turbulenten Strömungen, die während des Füllvorgangs zwangsläufig auftreten, ein nicht unwesentlicher und schwer zu quantifizierender Teil des flüssigen Kältemittels vom Strom des abgezogenen verdampften Kältemittels mitgerissen wird.

Der Erfindung liegt daher die Aufgabe zu Grunde, ein rasches Verfahren zum Befüllen von insbesondere warmen Kältemitteltanks für Kühlfahrzeuge anzugeben, das die Erfordernisse an eine öffentliche Füllstation erfüllt.

Gelöst ist diese Aufgabe durch ein Verfahren mit den Merkmalen des Patentanspruchs 1. Vorteilhafte Ausführungsformen der Erfindung sind in den Unteransprüchen angegeben.

Die Bezeichnungen "stromauf" und "stromab" beziehen sich im Rahmen der vorliegenden Erfindung auf die bestimmungsgemäße Fließrichtung des flüssigen kryogenen Kältemittels beim Füllvorgang, also vom Füllbehälter zum Kältemitteltank. Erfindungsgemäß wird also über die Füllleitung, die die einzige Verbindungsleitung zwischen Füllbehälter und Kältemitteltank darstellt, sowohl flüssiges Kältemittel zugeführt als auch verdampftes Kältemittel abgezogen. Die Füllleitung und die Kupplung zum Kältemitteltank sind dabei gasdicht ausgebildet, d.h. nach Herstellen der Strömungsverbindung zum Kältemitteltank tritt kein Gas über die Füllleitung oder die Kupplung aus; im Kältemitteltank verdampftes Gas wird im erfindungsgemäßen Verfahrensablauf ausschließlich über die Gasabzugsleitung abgeführt. Die Erfindung erfordert weder eine Verbindung der Gasphasen von Füllbehälter und Kältemitteltank miteinander noch eine am Kältemitteltank angeordnete Gasabzugsleitung.

Das Zuführen des flüssigen Kältemittels und das Abziehen des verdampften Kältemittels erfolgt erfindungsgemäß in einer Abfolge von mehreren, beispielsweise drei bis fünf Zyklen, in denen jeweils flüssiges Kältemittel über die Füllleitung zugeführt und anschließend gasförmiges Kältemittel abgeführt wird. Die Zahl der Zyklen ist dabei abhängig vom Innendruck und/oder der Temperatur im Innern des Kältemitteltanks vor Beginn der Befüllung. Das vom Füllbehälter zum Kältemitteltank geführte verflüssigte kryogene Kältemittel wird also vollständig entweder im Kältemitteltank verdampft und kühlt diesen damit ab, oder es verbleibt dort im flüssigen Zustand und steht für eine anschließende Verwendung, beispielsweise für die Kühlung eines auf dem Kühlfahrzeug montierten Kühlraumes zur Verfügung.

Das erfindungsgemäße Verfahren ist besonders für die rasche Befüllung von "warmen" Kältemitteltanks geeignet, deren Innentemperatur vor dem Füllvorgang also deutlich über der Gleichgewichtstemperatur des kryogenen Kältemittels bei dem im Kältemitteltank herrschenden Druck liegt, also beispielsweise bei Umgebungstemperatur. Dies ist beispielsweise der Fall, wenn der Kältemitteltank während seiner bestimmungsgemäßen Verwendung zuvor vollständig geleert wurde und bereits einige Zeit keine flüssige Phase mehr darin enthalten ist, oder nach einer Wartung des Tanks oder nach einer längeren Zeitdauer eines Stillstands des Kühlfahrzeugs.

Die Zeitdauer, nach der die Strömungsverbindung zum Füllbehälter unterbrochen und eine Strömungsverbindung durch die Gasabzugsleitung hergestellt wird (Schritte c, d) wird beispielsweise durch das Vorliegen eines bestimmten Innendrucks im Kältemitteltank festgelegt, spätestens durch das Erreichen oder Überschreiten eines Druckwerts, der dem Druck im Füllbehälter entspricht. Durch das Verdampfen des Kältemittels wird der Kältemitteltank abgekühlt, mit der Folge, dass beim nächsten oder einem späteren Zyklus der Befüllung der Druckanstieg im Kältemitteltank wesentlich langsamer als zuvor erfolgt. Es kann in diesem Fall also zweckmäßig sein, die Zeitdauer bis zum erneuten Schließen der Strömungsverbindung zwischen Füllleitung und Füllbehälter nicht an das Erreichen des gleichen Druckwerts wie zuvor zu koppeln, sondern entweder einen neuen, niedrigeren Druckwert zu wählen, oder die Strömungsverbindung nach einer bestimmten Zeitdauer zu unterbrechen, die sich nach vorhergehenden empirischen Untersuchungen als geeignet herausgestellt hat. Allgemein sollten die Zeitdauern, während dessen eine Strömungsverbindung zwischen Füllbehälter und Kältemitteltank besteht, mit jeden Zyklus der Befüllung zunehmen.

Diese beschriebene Vorgehensweise ist notwendig, um den Kältemitteltank zu konditionieren, d.h. abzukühlen. Das flüssige Kältemittel dient dabei zunächst als Kältelieferant, um den Kältemitteltank auf seine Betriebstemperatur zu kühlen, bei der er zum Bevorraten des Kältemittels im flüssigen Zustand über einen längeren Zeitraum geeignet ist. Erst danach erfolgt die eigentliche Befüllung (Betankung) des Kältemitteltanks mit flüssigem Kältemittel erfolgen. Die aufeinanderfolgenden Zyklen von Entspannung der Atmosphäre im Kältemitteltank und Zuführung von flüssigem Kältemittel erfolgen über lediglich einen Schlauch. Dies hat auch sicherheitstechnische Vorteile: Sie vermeidet, dass der Fahrer den Kältemitteltank am Fahrzeug zur Atmosphäre hin entspannen muss und somit in einer Stickstoffnebelwolke steht, die ihm den Luftsauerstoff verdrängt.

Erfindungsgemäß liegt das kryogene Kältemittel im Füllbehälter im unterkühlten Zustand vor, d.h. das kryogene Kältemittel kann dem Kältemitteltank zugeführt werden, ohne dass ein wesentlicher Teil des Kältemittels beim Transport durch die Füllleitung verdampft und dadurch zu Kavitationsproblemen oder zu Problemen bei der genauen Erfassung der Durchflussmenge führt. Hierzu ist eine entsprechende Konditionierung des Füllbehälters erforderlich. Beispielsweise liegt das Kältemittel im Füllbehälter zunächst bei einem vergleichsweise niedrigem Druck von beispielsweise 1 bis 2 bar(g) vor; beispielsweise wird das flüssige Kältemittel dem Füllbehälter bei diesem Druck aus einem größeren Speichertank zugeführt. Unmittelbar vor dem Beginn der Füllprozeder erfolgt ein Druckaufbau im Füllbehälter, beispielsweise durch Herstellen einer Strömungsverbindung mit einem Druckaufbautank, in dem ein höherer Druck von beispielsweise 5-10 bar(g) vorliegt.

In einer vorteilhaften Weiterbildung der Erfindung mündet der stromab zur Kupplung liegende Abschnitt der Füllleitung in einem oberen Bereich des Kältemitteltanks an einer Düsenanordnung aus, mittels der während des Füllvorgangs verflüssigtes Kältemittel in eine im Kältemitteltank vorliegende Gasphase eingesprüht wird. Dadurch wird insbesondere bei "warmen" Kältemitteltanks die Gasphase gekühlt und der Druck im Kältemitteltank reduziert und der Betankungsvorgang beschleunigt. Das erfindungsgemäße Verfahren eignet sich insbesondere zur Betankung von Kältemitteltanks, die insbesondere auf Transportfahrzeugen, insbesondere Kühllastwagen montiert sind, mit einem kryogenen Kältemittel. Bevorzugt handelt es sich bei dem kryogenen Kältemittel um flüssigen Stickstoff, flüssigen Wasserstoff oder einem verflüssigten Kohlenwasserstoffgas, wie beispielsweise LNG oder LPG. Die Menge an insgesamt dem Kältemitteltank zugeführtem Kältemittel wird bevorzugt an einer in der Füllleitung, stromauf zum Abzweig der Gasabzugsleitung und dem die Füllleitung von dem Füllbehälter strömungstechnisch trennenden Sperrventil angeordneten Messeinrichtung erfasst. Da gleichzeitig mit der Zuführung des verflüssigten Kältemittels kein Gas aus dem Kältemitteltank entweicht, entspricht die an der Messeinrichtung erfasste Menge sehr genau der tatsächlich in den Kältemitteltank eingebrachten Menge an Kältemittel. Zwar verdampft ein Teil des Kältemittels und wird im Verlauf der Zyklen nachfolgend abgeführt, jedoch wird der Kälteinhalt dieses Gases zum Abkühlen des Kältemitteltanks eingesetzt. Dadurch ist das erfindungsgemäße Verfahren insbesondere auch für die Ausstattung öffentlicher Tankstellen für kryogene Kältemittel geeignet.

Bevorzugt beträgt der Druck im Füllbehälter zwischen 5bar(g) und 10 bar(g) und der Druck im Kältemitteltank zwischen 0 bar(g) und 2 bar(g), bei Verwendung von flüssigem Stickstoff als Kältemittel. Um zu verhindern, dass ein Teil des Kältemittels bereits aufgrund der Entspannung beim Eintritt in den Kältemitteltank verdampft wird der Druck im Kältemitteltank bevorzugt so gewählt, dass seine Gleichgewichtstemperatur über der Temperatur des im Füllbehälter vorliegenden Kältemittels liegt.

Eine zur Durchführung des erfindungsgemäßen Verfahrens besonders geeignete Vorrichtung, die nicht im Schutzumfang der Ansprüche enthalten wird, umfasst einen Füllbehälter, eine mit einem zu befüllenden Kältemitteltank an einer Kupplung verbindbare Füllleitung sowie eine von der Füllleitung stromauf zur Kupplung abzweigende Gasabzugsleitung. Weiterhin ist die Vorrichtung mit Sperrarmaturen zum Sperren bzw. Öffnen der Strömungsverbindung zwischen Füllleitung und Füllbehälter sowie zum Sperren bzw. Öffnen der Gasabzugsleitung ausgerüstet, die bevorzugt mittels einer Steuereinheit durch manuelle Eingabe oder nach einem vorgegebenen Programm angesteuert und betätigt werden können. Das Sperrventil zum Unterbrechen der Strömungsverbindung zwischen Füllbehälter und Füllleitung ist dabei stromauf zur Abzweigung zur Gasabzugsleitung angeordnet. Bevorzugt ist stromauf zu diesem Sperrventil eine Messeinrichtung zum Erfassen des Durchflusses des aus dem Füllbehälter dem Kältemitteltank zugeführten flüssigen kryogenen Kältemittel angeordnet.

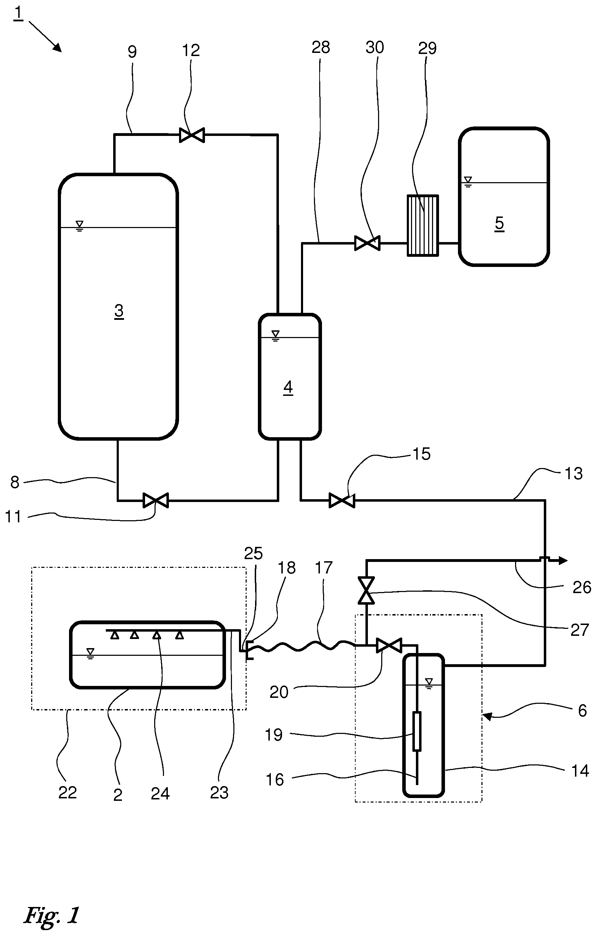

Anhand der Zeichnung soll ein Ausführungsbeispiel der Erfindung näher erläutert werden. Die einzige Zeichnung (Fig. 1) zeigt schematisch den Aufbau einer Vorrichtung zur Durchführung des erfindungsgemäßen Verfahrens.

Die Vorrichtung 1 zum Befüllen eines mobilen Kältemitteltanks 2 mit einem verflüssigten kryogenen Kältemittel umfasst einen Speichertank 3, einen Füllbehälter 4, einen Druckaufbaubehälter 5 und eine Füllstation 6. Beispielsweise hat der Speichertank 3 ein Fassungsvermögen von 20000-50000l, der Druckaufbaubehälter 5 ein Fassungsvermögen von 5000-10000l und der Füllbehälter 4 ein Fassungsvermögen von 1000-2000l, also weniger als ein Zehntel des Fassungsvermögens des Speichertanks 3. Speichertank 3, Füllbehälter 4 und Druckaufbaubehälter 5 sind, ebenso wie die sie verbindenden und von ihnen abgehenden Leitungen, thermisch gut isoliert ausgebildet.

Vom Boden des Speichertanks 3 führt eine Flüssigzuleitung 8 zum Füllbehälter 4. Eine Gasrückleitung 9 verbindet den Speichertank 3 mit dem Füllbehälter 4 in deren jeweils oberem Bereich. Flüssigzuleitung 8 und Gasrückleitung 9 können durch Betätigen von Ventilen 11, 12 gesperrt und geöffnet werden.

Vom Boden des Füllbehälters 4 führt eine Flüssigzuleitung 13 zu einem als Phasentrenner fungierenden Zwischenbehälter 14 in der Füllstation 6, wobei auch hier ein Ventil 15 das Sperren oder Öffnen der Flüssigzuleitung 13 ermöglicht. Von einem unteren Bereich des Zwischenbehälters 14 führt eine Füllleitung 16, die einen flexiblen Leitungsabschnitt 17 aufweist, zu einem Kupplungsanschluss 18. Zur Erfassung des Durchflusses durch die Flüssigzuleitung 13 ist eine hierzu geeignete Messeinrichtung 19, beispielsweise eine Messblende, vorgesehen. Stromab zur Messeinrichtung 19 ist in der Füllleitung 16 ein Ventil 20 angeordnet, mittels dessen die Füllleitung 16 gesperrt oder geöffnet werden kann. Die Füllstation 6 ist nach Art einer Zapfsäule aufgebaut und ermöglicht in der unten näher beschriebenen Weise die Betankung eines Kältemitteltanks 2, der sich auf einem - hier durch eine strichpunktierte Linie lediglich angedeutetem - Kühlfahrzeug 22 befindet. Der Kältemitteltank 2 dient zur Kühlung eines hier nicht gezeigten Kühlraums auf dem Kühlfahrzeug 22, beispielsweise eines Kühlraums zum Transportieren von gekühlten und/oder gefrorenen Lebensmitteln.

Auf dem Kühlfahrzeug 22 führt eine Zuführleitung 23 von einem mit dem Kupplungsanschluss 18 fest, jedoch lösbar verbindbaren Kupplungsstück 25 zum Kältemitteltank 2, in dem sie in einem oberen Bereich an einer aus mehreren Sprühdüsen bestehenden Düsenanordnung 24 ausmündet.

Von der Füllleitung 16 zweigt, strömungstechnisch zwischen Kupplungsanschluss 18 und Ventil 20, eine Abgasleitung 26 ab, die mittels eines Ventils 27 gesperrt oder geöffnet werden kann. Die Abgasleitung 26 mündet in hier nicht gezeigter Weise in einem Auffangbehälter, einer Rückleitung oder in einen Gasaustritt, an dem das Gas in die Umgebungsatmosphäre abgegeben wird.

Aus einem oberen Bereich des Füllbehälters 4 führt eine Druckgasleitung 28 zum Druckaufbaubehälter 5. In der Druckgasleitung 28 ist ein Verdampfer 29, insbesondere ein Luftverdampfer, angeordnet. Dir Druckgasleitung 28 kann mittels eines Ventils 30 gesperrt oder geöffnet werden, das wie alle anderen zuvor genannten Ventile auch, manuell oder mittels eines ferngesteuerten Motors betätigt werden kann.

Im Betrieb der Vorrichtung 1 wird ein flüssiges kryogenes Kältemittel, bevorzugt flüssiger Stickstoff, im Speichertank 3 bei einem Druck p₁ von beispielsweise zwischen 1 bar(g) und 2 bar(g) gelagert. Durch Öffnen des Ventils 11 bei Offenhaltung des Ventils 12 wird der Füllbehälter 4 bis zu Höhe eines vorgegebenen Pegels befüllt. Die Ventile 15 und 30 sind währenddessen geschlossen.

Vor dem Befüllen des Kältemitteltanks 2 wird der flexible Leitungsabschnitt 17 der Füllleitung 16 am Kupplungsanschluss 18 mit dem Kupplungsstück 25 der Füllleitung 23 verbunden. Das Ventil 20 ist geschlossen. Sofern im Kältemitteltank ein hoher Druck vorliegt, wird das Ventil 27 geöffnet und Gas aus dem Kältemitteltank 2 wird über die Abgasleitung 26 abgeführt, bis im Kältemitteltank 2 ein vorgegebener Druckwert von beispielsweise 0 bar(g) bis 2 bar(g) erreicht ist. Anschließend wird das Ventil 27 geschlossen.

Weiterhin werden die Ventile 11, 12 geschlossen und das Ventil 30 geöffnet. Aus dem Druckaufbaubehälter 5, in dem das kryogene Kältemittel bei einem Druck p₂ von beispielsweise zwischen 5 bar(g) und 8 bar(g) vorliegt, strömt flüssiges Kältemittel aus, wird im Verdampfer 29 verdampft und strömt als Gas in den Kopfraum des Füllbehälters 4 ein, in dem dadurch zumindest annähernd der Druck p₂ herrscht. Die Druckerhöhung im Füllbehälter 4 führt zugleich dazu, das das verflüssigte Kältemittel dort nunmehr unterkühlt vorliegt, also bei einer wesentlich tieferen Temperatur als es der Gleichgewichtstemperatur beim Druck p₂ entspricht. Anschließend wird das Ventil 15 geöffnet, wodurch flüssiges Kältemittel aus dem Füllbehälter 4 über die Flüssigzuleitung 13 in den Zwischenbehälter 14 einströmt und dort eine flüssige Phase ausbildet, in die die Füllleitung 16 mit ihrem vom Kupplungsanschluss 18 entgegen gesetztem Ende eintaucht. Nach Befüllen des Zwischenbehälters 14 herrscht dort im wesentlichen der gleiche Druck wie im Füllbehälter 4, also ungefähr p₂.

Anschließend wird das Ventil 20 geöffnet. Das flüssige Kältemittel strömt im noch unterkühlten Zustand über die Füllleitung 16 und die Zuführleitung 23 zur Düsenanordnung 24, und wird in eine im Kältemitteltank 2 vorliegende Gasphase eingesprüht. Herrscht im Kältemitteltank 4 eine vergleichsweise hohe Temperatur, die wesentlich höher ist als die Temperatur des zugeführten Kältemittels ist, beispielsweise Umgebungstemperatur, verdampft das zugeführte Kältemittel und es kommt zu einem raschen Druckanstieg im Innern des Kältemitteltanks 2. Übersteigt der Druck im Innern des Kältemitteltanks 2 einen bestimmten vorgegebenen Druckwert p₃, wird das Ventil 20 geschlossen und damit die Strömungsverbindung der Füllleitung 16 zum Speichertank 3 unterbrochen. Beispielsweise erfolgt dies bei einem Druckwert, der dem Druck p₂ im Zwischenbehälter 14 entspricht oder diesen übersteigt, was in einfacher Weise dadurch detektiert wird, dass der an der Messeinrichtung 19 erfasste Durchfluss zum Erliegen kommt. Anschließend wird das Ventil 27 geöffnet und der Kältemitteltank 2 druckentlastet - beispielsweise auf Umgebungsdruck oder auf einen - im Vergleich zum Druck p₂ im Füllbehälter 4 niedrigen, jedoch im Vergleich zum Druck p₁ im Speichertank 3 höheren - Überdruck p₄ von beispielsweise 1,5 bis 3 bar(g). Die Wahl eines gegenüber dem Druck im Speichertank höheren Drucks verhindert, dass ein Teil des Kältemittels bereits aufgrund der Entspannung beim Eintritt in den Kältemitteltank verdampft. Bei Erreichen dieses Druckwerts wird das Ventil 27 geschlossen und das Ventil 20 erneut geöffnet. Durch die zuvor durchgeführte Zuführung des flüssigen Kältemittels in den Kältemitteltank 2 ist dieser bereits vorgekühlt worden. Beim nun folgenden Zyklus der Befüllung und den darauf folgenden Zyklen erfolgt der Druckanstieg im Kältemitteltank langsamer als bei den vorhergehenden. Daher wird der Füllvorgang nach einer sich mit jedem Zyklus verlängernden Zeitdauer von jeweils beispielsweise 10s bis 1min abgebrochen, das Ventil 20 geschlossen und das Ventil 27 zur erneuten Druckentlastung des Kältemitteltanks 2 auf den Druck p₄ geöffnet. Diese Prozedur wird so oft wiederholt, bis der Kältemitteltank 2 vollständig gefüllt ist.

Eine vollständige Befüllung des Kältemitteltanks liegt vor, wenn die Düsenanordnung 24 im Kältemitteltank 2 von flüssigem Kältemittel umspült wird. Dies führt zu einem Druckanstieg in der Füllleitung 23, der an der Messeinrichtung 19 erfasst werden kann. Nach Beendigung des Füllvorgangs werden die Ventile 20, 30 geschlossen. Kupplungsstück 25 und Kupplungsanschluss 18 können nun voneinander getrennt werden. Durch Öffnen des Ventils 12 erfolgt ein Druckausgleich zwischen dem Speichertank 3 und dem Füllbehälter 4, der nun erneut mit flüssigem Kältemittel aus dem Speichertank 3 bei dem dort vorliegenden Druck p₁ befüllt werden kann. Die Überwachung des Verfahrensablaufs und die Ansteuerung der Ventile 11, 12, 15, 20, 27, 30 erfolgt zentral mittels einer hier nicht gezeigten Steuereinheit.

Durch den Betankungsvorgang nach dem erfindungsgemäßen Verfahren wird nicht nur der Kältemittelverbrauch minimiert und die Anforderungen an eine öffentliche Füllstation erfüllt, sondern der Betankungsvorgang erfolgt selbst bei warmen Kältemitteltanks auch sehr rasch. Beispielsweise kann ein 660l fassender Tank, dessen Innentemperatur vor der Betankung der Umgebungstemperatur (18°C) entspricht, innerhalb von 15 min mit flüssigem Stickstoff gefüllt werden, wobei die Strömungsverbindung zwischen Füllleitung 16 und Füllbehälter 4 während der Betankung nicht öfter als 3-4 mal unterbrochen werden muss.

### Bezugszeichenliste

- 1.: Vorrichtung
- 2.: Kältemitteltank
- 3.: Speichertank
- 4.: Füllbehälter
- 5.: Druckaufbaubehälter
- 6.: Füllstation
- 7.: -
- 8.: Flüssigzuleitung
- 9.: Gasrückleitung
- 10.: -
- 11.: Ventil
- 12.: Ventil
- 13.: Flüssigzuleitung
- 14.: Zwischenbehälter
- 15.: Ventil
- 16.: Füllleitung
- 17.: Flexibler Leitungsabschnitt
- 18.: Kupplungsanschluss
- 19.: Messeinrichtung
- 20.: Ventil
- 21.: -
- 22.: Kühlfahrzeug
- 23.: Zuführleitung
- 24.: Düsenanordnung
- 25.: Kupplungsstück
- 26.: Abgasleitung
- 27.: Ventil
- 28.: Druckgasleitung
- 29.: Verdampfer
- 30.: Ventil

## Patentansprüche

1. Verfahren zum Abkühlen und Befüllen eines warmen Kältemitteltanks (2) eines Fahrzeugs (22) mit einem verflüssigten kryogenen Kältemittel aus einem Füllbehälter (4) über eine Füllleitung (16, 17),
**gekennzeichnet durch** folgende Schritte:
a. mittels einer der Füllleitung (16, 17) zugeordneten Kupplung (18, 25) wird eine Stömungsverbindung zwischen einer im Füllbehälter (4) vorliegenden flüssigen Phase des Kältemittels und dem Kältemitteltank (2) hergestellt,
b. über die Füllleitung wird flüssiges Kältemittel in den Kältemitteltank (2) überführt, das im Kältemitteltank (2) zumindest teilweise verdampft,
c. nach einer vorgegebenen Zeitdauer wird die Strömungsverbindung der Füllleitung (16, 17) zum Füllbehälter (4) mittels eines Sperrventils (20) unterbrochen,
d. es wird eine Strömungsverbindung **durch** eine von der Füllleitung (16, 17), stromab zum Sperrventil (20) und stromauf zur Kupplung (18, 25) abzweigende Gasabzugsleitung (26) hergestellt,
e. über die Füllleitung (16, 17) und die Gasabzugsleitung (26) wird verdampftes Kältemittel abgezogen, bis ein vorgegebener Druck erreicht ist,
f. die Strömungsverbindung **durch** die Gasabzugsleitung (26) wird unterbrochen und die Strömungsverbindung zwischen Füllleitung (16, 17) und Füllbehälter (4) geöffnet,
g. die Schritte b. bis f. werden so lange wiederholt, bis der Kältemitteltank (2) gefüllt ist,
**dadurch** gekennzeichnet,
dass das kryogene Kältemittel im Füllbehälter (4) im unterkühlten Zustand vorliegt, der Druck im Kältemitteltank (2) niedriger als der Druck im Füllbehälter (4) ist und die Befüllung des Kältemitteltanks (2) über die Füllleitung (16, 17) unter der Wirkung der Druckdifferenz zwischen Füllbehälter (4) und Kältemitteltank (2) erfolgt.

2. Verfahren nach Anspruch 1, **dadurch gekennzeichnet, dass** das verflüssigte kryogene Kältemittel mittels einer Düsenanordnung (24) in den Kältemitteltank eingesprüht wird.

3. Verfahren nach einem der vorhergehenden Ansprüche, **dadurch gekennzeichnet, dass** als verflüssigtes kryogenes Kältemittel flüssiger Stickstoff flüssiger Wasserstoff oder ein verflüssigtes Kohlenwasserstoffgas zum Einsatz kommt.

4. Verfahren nach einem der vorhergehenden Ansprüche, **dadurch gekennzeichnet, dass** in der Füllleitung (16, 17), stromauf zum Abzweig der Gasabzugsleitung (26), an einer Messeinrichtung (19) ein Mengendurchfluss gemessen wird.

5. Verfahren nach einem der vorhergehenden Ansprüche, **dadurch gekennzeichnet, dass** der Druck p₁ im Füllbehälter (4) zwischen 5bar(g) und 10 bar(g) beträgt und der Druck p₂ im Kältemitteltank (2) zwischen 0 bar(g) und 2 bar(g) beträgt.

## Claims

1. Method for cooling and filling a warm refrigerant tank (2) of a vehicle (22) with a liquefied cryogenic refrigerant from a filling container (4) via a filling line (16, 17),
**characterized by** the following steps:
a. by means of a coupling (18, 25) assigned to the filling line (16, 17), a flow connection is established between a liquid phase of the refrigerant, present in the filling container (4), and the refrigerant tank (2),
b. liquid refrigerant is transferred via the filling line into the refrigerant tank (2) and at least partially evaporates in the refrigerant tank (2),
c. after a predefined period of time, the flow connection of the filling line (16, 17) to the filling container (4) is interrupted by means of a shut-off valve (20),
d. a flow connection is established through a gas extraction line (26) that branches off from the filling line (16, 17), downstream of the shut-off valve (20) and upstream of the coupling (18, 25),
e. vaporized refrigerant is extracted via the filling line (16, 17) and the gas extraction line (26) until a predefined pressure is reached,
f. the flow connection through the gas extraction line (26) is interrupted and the flow connection between filling line (16, 17) and filling container (4) is opened,
g. steps b. to f. are repeated until the refrigerant tank (2) is filled,
**characterized in that**
the cryogenic refrigerant in the filling container (4) is in the supercooled state, the pressure in the refrigerant tank (2) is lower than the pressure in the filling container (4), and the filling of the refrigerant tank (2) via the filling line (16, 17) takes place under the effect of the pressure difference between filling container (4) and refrigerant tank (2).

2. Method according to Claim 1, **characterized in that** the liquefied cryogenic refrigerant is sprayed into the refrigerant tank by means of a nozzle arrangement (24).

3. Method according to one of the preceding claims, **characterized in that** the liquefied cryogenic refrigerant used is liquid nitrogen, liquid hydrogen or a liquefied hydrocarbon gas.

4. Method according to one of the preceding claims, **characterized in that** a mass flow rate is measured in the filling line (16, 17), upstream of the branching of the gas extraction line (26), at a measuring device (19).

5. Method according to one of the preceding claims, **characterized in that** the pressure p₁ in the filling container (4) is between 5 bar(g) and 10 bar(g), and the pressure p₂ in the refrigerant tank (2) is between 0 bar(g) and 2 bar(g).

## Revendications

1. Procédé de refroidissement et de remplissage d'un réservoir d'agent réfrigérant chaud (2) d'un véhicule (22) avec un agent réfrigérant cryogénique liquéfié provenant d'un récipient de remplissage (4) par l'intermédiaire d'une conduite de remplissage (16, 17), **caractérisé par** les étapes suivantes :
a. au moyen d'un élément d'accouplement (18, 25) associé à la conduite de remplissage (16, 17), une liaison d'écoulement entre une phase liquide de l'agent réfrigérant présente dans le récipient de remplissage (4) et le réservoir d'agent réfrigérant (2) est établie,
b. de l'agent réfrigérant liquide est transféré par l'intermédiaire de la conduite de remplissage dans le réservoir d'agent réfrigérant (2), qui se vaporise au moins partiellement dans le réservoir d'agent réfrigérant (2),
c. après une durée prédéfinie, la liaison d'écoulement de la conduite de remplissage (16, 17) vers le récipient de remplissage (4) est interrompue au moyen d'une soupape d'arrêt (20),
d. une liaison d'écoulement est établie par une conduite d'évacuation de gaz (26) partant en dérivation de la conduite de remplissage (16, 17) en aval de la soupape d'arrêt (20) et en amont de l'élément d'accouplement (18, 25),
e. de l'agent réfrigérant vaporisé est évacué par l'intermédiaire de la conduite de remplissage (16, 17) et de la conduite d'évacuation de gaz (26), jusqu'à ce qu'une pression prédéfinie soit atteinte,
f. la liaison d'écoulement par la conduite d'évacuation de gaz (26) est interrompue et la liaison d'écoulement entre la conduite de remplissage (16, 17) et le récipient de remplissage (4) est ouverte,
g. les étapes b. à f. sont répétées jusqu'à ce que le réservoir d'agent réfrigérant (2) soit rempli, **caractérisé en ce que**
l'agent réfrigérant cryogénique se présente dans le récipient de remplissage (4) à l'état sous-refroidi, la pression dans le réservoir d'agent réfrigérant (2) est inférieure à la pression dans le récipient de remplissage (4) et le remplissage du réservoir d'agent réfrigérant (2) par l'intermédiaire de la conduite de remplissage (16, 17) s'effectue sous l'effet de la différence de pression entre le récipient de remplissage (4) et le réservoir d'agent réfrigérant (2).

2. Procédé selon la revendication 1, **caractérisé en ce que** l'agent réfrigérant cryogénique liquéfié est injecté dans le réservoir d'agent réfrigérant au moyen d'un agencement de buse (24).

3. Procédé selon l'une quelconque des revendications précédentes, **caractérisé en ce que** de l'azote liquide, de l'hydrogène liquide ou un hydrocarbure gazeux liquéfié est utilisé en tant qu'agent réfrigérant cryogénique liquéfié.

4. Procédé selon l'une quelconque des revendications précédentes, **caractérisé en ce qu'**un débit quantitatif est mesuré au niveau d'un dispositif de mesure (19) dans la conduite de remplissage (16, 17), en amont de la dérivation de la conduite d'évacuation de gaz (26).

5. Procédé selon l'une quelconque des revendications précédentes, **caractérisé en ce que** la pression p₁ dans le récipient de remplissage (4) est comprise entre 5 bar(g) et 10 bar(g) et la pression p₂ dans le réservoir d'agent réfrigérant (2) est comprise entre 0 bar(g) et 2 bar(g).
